(19) Europäisches Patentamt
European Patent Office
Office européen des brevets

(11) EP 4 501 571 A1

(12) **EUROPEAN PATENT APPLICATION**
published in accordance with Art. 153(4) EPC

(43) Date of publication:
**05.02.2025 Bulletin 2025/06**

(21) Application number: **23779838.4**

(22) Date of filing: **20.03.2023**

(51) International Patent Classification (IPC):
***B29B 9/08*** (2006.01) ***B29B 9/10*** (2006.01)
***B29B 9/12*** (2006.01) ***B30B 11/00*** (2006.01)
***C08G 65/40*** (2006.01) ***C08J 3/12*** (2006.01)
***C08K 3/013*** (2018.01) ***C08L 71/10*** (2006.01)

(52) Cooperative Patent Classification (CPC):
**B29B 9/08; B29B 9/10; B29B 9/12; B30B 11/00; C08G 65/40; C08J 3/12; C08K 3/013; C08L 71/10**

(86) International application number:
**PCT/JP2023/010892**

(87) International publication number:
**WO 2023/189822 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022055984**

(71) Applicants:
- **Honshu Chemical Industry Co., Ltd.**
  **Tokyo 103-0027 (JP)**
- **DAIKIN INDUSTRIES, LTD.**
  **Osaka-shi, Osaka 530-0001 (JP)**

(72) Inventors:
- **HASHIKAWA, Akihiro**
  **Wakayama-shi, Wakayama 641-0007 (JP)**
- **SHIMODA, Tomoaki**
  **Wakayama-shi, Wakayama 641-0007 (JP)**
- **NAKANO, Yasuhiro**
  **Osaka-shi, Osaka 530-8323 (JP)**
- **MATSUMOTO, Haruna**
  **Osaka-shi, Osaka 530-8323 (JP)**

(74) Representative: **Grünecker Patent- und Rechtsanwälte**
**PartG mbB**
**Leopoldstraße 4**
**80802 München (DE)**

(54) **METHOD FOR MANUFACTURING POLYETHER NITRILE MOLDING MATERIAL AND METHOD FOR MANUFACTURING POLYETHER NITRILE RESIN COMPOSITION MOLDING MATERIAL**

(57) An object is to provide a polyether nitrile molding material that exhibits high flowability during molding. As a solution, a method for producing a polyether nitrile molding material, the method including molding a polyether nitrile having a bulk density of 0.3 to 1.0 g/mL, is provided.

EP 4 501 571 A1

## Description

### Technical Field

The present invention relates to methods for producing a polyether nitrile molding material and a polyether nitrile resin composition molding material, the materials exhibiting high flowability during molding.

### Background Art

Aromatic ether copolymers are not only excellent in heat resistance, flame resistance, chemical resistance, and mechanical strength but also are thermoplastic and can be molded by heating, and thus are useful resins that can provide various molded articles such as filaments, films, sheets, tubes, pipes, and round bars through molding methods such as injection molding, extrusion molding, and heat compression molding.

(Co)polymers are generally heated, melted, and kneaded with resin materials added and then formed into molding materials (resin compositions) such as pellets and chips, which are processed into various molded articles, but aromatic ether copolymers are useful as base resins for molding materials (resin compositions).

Polyether nitrile (e.g., PTLs 1 and 2), which is one of the aromatic ether copolymers, is a resin having the highest level of heat resistance and high mechanical strength among thermoplastic resins. This is obtained in the form of a polymer powder by cleaning and drying a polyether nitrile obtained by a polycondensation reaction, and this powder is used in the form of a molding material such as pellets or chips for ease of processing.

Polyether nitrile is a resin that has a very high melting point and needs to be molded at a high temperature close to 400°C.

### Citation List

### Patent Literature

PTL 1: Japanese Unexamined Patent Application Publication No. 60-147439
PTL 2: Japanese Unexamined Patent Application Publication No. 61-055120

### Summary of Invention

### Technical Problem

The present inventors have found a problem that when a polyether nitrile powder is subjected to melt kneading or heat compression molding to be formed into a molding material such as pellets or chips, flowability greatly decreases.

An object of the present invention is to provide a method for producing a molding material that exhibits high flowability during molding, the method using a polyether nitrile.

### Solution to Problem

The present inventors have previously revealed that when a polyether nitrile is processed in the presence of oxygen in air using a molding machine such as a kneader or a compressor in order to provide a molding material such as pellets or chips, only those which have decreased flowability can be obtained, but when the processing is performed under exclusion of oxygen, a molding material having high flowability can be obtained.

This time, the present inventors have found that by using a polyether nitrile having a bulk density of 0.3 to 1.0 g/mL, the influence of oxygen can be suppressed, so that the polyether nitrile exhibits high flowability when the polyether nitrile is molded to produce a molding material, and a polyether nitrile molding material that exhibits high flowability during molding can be obtained, thereby completing the present invention.

The present invention is as follows.

1. A method for producing a polyether nitrile molding material, the method including molding a polyether nitrile having a bulk density of 0.3 to 1.0 g/mL.
2. The method for producing a polyether nitrile molding material according to 1., wherein the polyether nitrile is shaped as a powder and granular body or a compressed powder and granular body.
3. The method for producing a polyether nitrile molding material according to 1. or 2., wherein the polyether nitrile

includes a polyether nitrile having a repeating unit represented by general formula (1).

[Chem. 1]

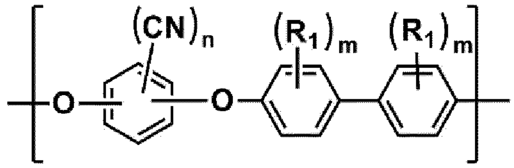

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

4. The method for producing a polyether nitrile molding material according to 1., wherein the molding is performed in a temperature range higher than a melting point of the polyether nitrile and not higher than a temperature 40°C higher than the melting point.

5. The method for producing a polyether nitrile molding material according to 1., wherein the polyether nitrile molding material has a melt flow rate (MFR) in a range of 2 to 50 g/10 min as measured at 390°C under a load of 5000 g in accordance with ISO 1133.

6. A method for producing a polyether nitrile resin composition, the method including mixing a polyether nitrile molding material obtained by the production method according to 1. with at least one selected from the group consisting of (A) to (C) below.

(A) a thermoplastic resin material
(B) an additive
(C) a filler

7. A method for producing a polyether nitrile resin composition molding material, the method including molding a polyether nitrile resin composition obtained by mixing a polyether nitrile having a bulk density of 0.3 to 1.0 g/mL with at least one selected from the group consisting of (A) to (C) below.

(A) a thermoplastic resin material
(B) an additive
(C) a filler

8. The method for producing a polyether nitrile resin composition molding material according to 7., wherein the polyether nitrile includes a polyether nitrile having a repeating unit represented by general formula (1).

[Chem. 2]

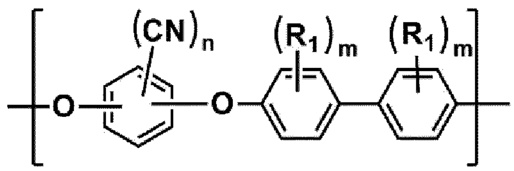

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

9. The method for producing a polyether nitrile resin composition molding material according to 7. or 8., wherein the molding is performed in a temperature range higher than a melting point of the polyether nitrile and not higher than a temperature 40°C higher than the melting point. Advantageous Effects of Invention

According to the production method of the present invention, a polyether nitrile molding material can be efficiently produced because a polyether nitrile exhibits high flowability when the polyether nitrile is molded to produce a molding

material. Furthermore, the obtained polyether nitrile molding material has high flowability and thus can stably provide a molded article excellent in surface smoothness, dimensional stability, etc. and having improved usage quality, which is extremely useful. Description of Embodiments

A polyether nitrile used in a method for producing a polyether nitrile molding material and a method for producing a polyether nitrile resin composition molding material according to the present invention has a bulk density of 0.3 to 1.0 g/mL, and in particular, the polyether nitrile is preferably obtained by subjecting an aromatic dihydroxy compound (I) and a dihalobenzonitrile compound (II) to a desalting polycondensation reaction in the presence of a basic compound.

<Aromatic dihydroxy compound (I)>

The aromatic dihydroxy compound (I) in the present invention includes all aromatic compounds having two hydroxy groups. Among them, a compound represented by general formula (2) is preferred.

[Chem. 3]

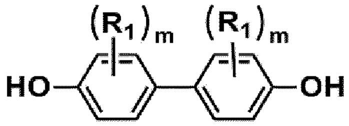
(2)

(In the formula, $R_1$ and m are as defined in general formula (1).)

Each $R_1$ in general formula (2) independently represents a linear or branched alkyl group having 1 to 6 carbon atoms, a cyclic alkyl group having 5 or 6 carbon atoms, or a phenyl group. In particular, $R_1$ is preferably a linear or branched alkyl group having 1 to 4 carbon atoms, a cyclic alkyl group having 5 or 6 carbon atoms, or a phenyl group, more preferably a linear or branched alkyl group having 1 to 4 carbon atoms or a phenyl group, particularly preferably an alkyl group having one carbon atom, that is, a methyl group.

Each m in general formula (2) independently represents an integer of 0 to 4. In particular, m is preferably 0, 1, or 2, more preferably 0 or 1, particularly preferably 0. When m is 1 or 2, a structural configuration in which $R_1$ is bonded to the ortho position with respect to the oxygen atom is preferred.

Specific examples of the compound represented by general formula (2) include 4,4'-biphenol, 3,3'-biphenol, 4,4'-dihydroxy-3,3'-dimethylbiphenyl, 4,4'-dihydroxy-3,3',5,5'-tetramethylbiphenyl, and 4,4'-dihydroxy-2,2',3,3',5,5'-hexamethylbiphenyl. Of these, 4,4'-biphenol, 4,4'-dihydroxy-3,3'-dimethylbiphenyl, 4,4'-dihydroxy-3,3',5,5'-tetramethylbiphenyl, and 4,4'-dihydroxy-2,2',3,3',5,5'-hexamethylbiphenyl are preferred, 4,4'-biphenol, 4,4'-dihydroxy-3,3'-dimethylbiphenyl, and 4,4'-dihydroxy-3,3',5,5'-tetramethylbiphenyl are more preferred, and 4,4'-biphenol is particularly preferred.

<Dihalobenzonitrile compound (II)>

The dihalobenzonitrile compound (II) in the present invention includes all benzonitrile compounds having two halogen groups. Among them, a compound represented by general formula (3) is preferred.

[Chem. 4]

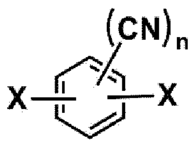
(3)

(In the formula, each X independently represents a halogen atom, and n is as defined in general formula (1).)

Each X in general formula (3) independently represents a halogen atom, preferably independently represents a chlorine atom, a bromine atom, or an iodine atom, more preferably independently represents a chlorine atom or a bromine atom, particularly preferably represents a chlorine atom.

In general formula (3), n represents an integer of 1 to 4. In particular, n is preferably 1, 2, or 3, more preferably 1 or 2, particularly preferably 1. When n is 1, a structural configuration in which halogen atoms are bonded to both the ortho positions with respect to the cyano group is preferred.

Specific examples of the dihalobenzonitrile compound (II) in the present invention include 2,6-difluorobenzonitrile, 2,5-difluorobenzonitrile, 2,4-difluorobenzonitrile, 2,6-dichlorobenzonitrile, 2,5-dichlorobenzonitrile, 2,4-dichlorobenzonitrile, 2,6-dibromobenzonitrile, 2,5-dibromobenzonitrile, 2,4-dibromobenzonitrile, and 1,4-dichloro-2,5-dicyanobenzene. The dihalobenzonitrile compound (II) may also be a reactive derivative thereof. Of these, 2,6-difluorobenzonitrile and 2,6-dichlorobenzonitrile are suitable for use from the viewpoint of, for example, reactivity and economic efficiency. The compound represented by general formula (3) may be a combination of two or more of these compounds.

Examples of the reactive derivative include, in the case of structures derived from 2,6-dihalobenzonitrile, compounds that can react with aromatic dihydroxy compounds as represented by the following general formulae, and these mean compounds derived from the reactions between two 2,6-dihalobenzonitriles and between 2,6-dihalobenzonitrile and an aromatic dihydroxy compound.

[Chem. 5]

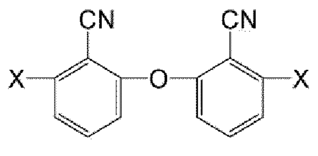

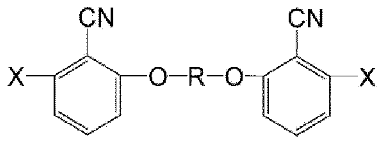

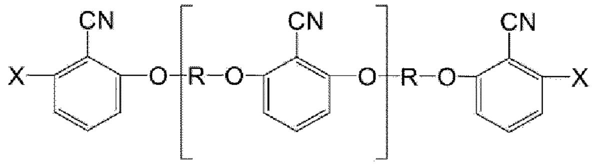

(In the formulae, R is as defined in general formula (2), and X is as defined in general formula (3).)

<Amount of raw material used>

In the desalting polycondensation reaction, the aromatic dihydroxy compound (I) is used at a molar ratio in the range of 0.8 to 1.2 relative to the dihalobenzonitrile compound (II). In particular, the aromatic dihydroxy compound (I) is preferably used in the range of 0.9 to 1.1, more preferably used in the range 0.95 to 1.05, particularly preferably used in the range of 0.99 to 1.01. To maximize the polymerization rate in the polycondensation reaction, the aromatic dihydroxy compound (I) and the dihalobenzonitrile compound (II) are preferably used at a molar ratio of substantially 1.00.

<Basic compound>

The basic compound in the desalting polycondensation reaction may be any compound, whether an organic base or an inorganic base, as long as it promotes the desalting polycondensation reaction and does not affect the quality, but is preferably an inorganic base, especially preferably an alkali metal compound or an alkaline-earth metal compound, particularly preferably an alkali metal compound.

Organic bases include tetramethylammonium hydroxide, triethylamine, N,N-diisopropylethylamine, 1,1,3,3-tetramethylguanidine (TMG), N,N-dimethyl-4-aminopyridine (DMAP), 2,6-lutidine, pyridine, 1,8-diazabicyclo[5.4.0]-7-undecene (DBU), 1,5-diazabicyclo[4.3.0]-5-nonene (DBN), 7-methyl-1,5,7-triazabicyclo[4.4.0]dec-5-ene (MTBD), 1,5,7-triazabicyclo[4.4.0]dec-5-ene (TBD), 1,8-bis(dimethylaminonaphthalene) (DMAN), 1,4-diazabicyclo[2.2.2]octane (DABCO), tert-butylimino-tri(pyrrolidino)phosphorane, tert-butylimino-tris(dimethylamino)phosphorane, 2-tert-butylimino-2-diethylamino-1,3-dimethylperhydro-1,3,2-diazaphosphorine, tert-octylimino-tris(dimethylamino)phosphorane, phosphazene base $P_2$-Et, phosphazene base $P_2$-t-Bu, phosphazene base $P_3$-t-Bu, phosphazene base $P_4$-t-Bu, and phosphazene base $P_4$-t-Oct.

Among inorganic bases, examples of alkali metal compounds include alkali metals such as lithium, rubidium, cesium, potassium, and sodium; alkali metal hydrides such as lithium hydride, rubidium hydride, cesium hydride, potassium hydride, and sodium hydride; alkali metal hydroxides such as lithium hydroxide, rubidium hydroxide, cesium hydroxide, potassium hydroxide, and sodium hydroxide; alkali metal carbonates such as lithium carbonate, rubidium carbonate, cesium carbonate, potassium carbonate, and sodium carbonate; and alkali metal hydrogen carbonates such as lithium hydrogen carbonate, rubidium hydrogen carbonate, cesium hydrogen carbonate, potassium hydrogen carbonate, and sodium hydrogen carbonate. These can be used alone or in combination of two or more.

By using such an alkali metal compound having a specific surface area of 0.3 $m^2/g$ or more, the desalting polycondensation reaction can be performed with high efficiency. The specific surface area of the alkali metal compound catalyst is preferably 0.8 $m^2/g$ or more, more preferably 1.2 $m^2/g$ or more. By using an alkali metal compound having a larger specific surface area, the chance of contact between the catalyst and the reaction raw materials is further increased, and the desalting polycondensation reaction can be performed with higher efficiency. When the specific surface area is

smaller than 0.3 $m^2/g$, the desalting polycondensation reaction cannot be performed with sufficiently high efficiency unless the amount of catalyst is increased, but an increase in the amount of catalyst is not preferred because the polycondensate quality is affected.

From the above, the basic compound in the desalting polycondensation reaction is preferably an alkali metal carbonate such as lithium carbonate, rubidium carbonate, cesium carbonate, potassium carbonate, or sodium carbonate, more preferably lithium carbonate, potassium carbonate, or sodium carbonate, particularly preferably potassium carbonate or sodium carbonate having a specific surface area of 0.3 $m^2/g$ or more from the viewpoint of availability.

In the desalting polycondensation reaction, the amount of the basic compound used, for example, in the case of an alkali metal compound, is usually preferably at least 2 times that of the dihydroxy compound (I) on a molar basis in terms of alkali metal ions contained, but side reactions, such as cleavage of an ether bond formed, will occur if a large excess of the alkali metal compound is used. Thus, the amount used is preferably in the range of 2 to 4 times, more preferably in the range of 2 to 2.4 times, particularly preferably in the range of 2 to 2.2 times, on a molar basis.

Examples of the method of producing a polyether nitrile according to the present invention include, but are not limited to, a method in which the aromatic dihydroxy compound (I) and the basic compound are allowed to react in a solvent to obtain a basic compound salt of the aromatic dihydroxy compound (I), which is then subjected to a desalting polycondensation reaction with the dihalobenzonitrile compound (II), and a method in which a desalting polycondensation reaction of a basic compound salt of the aromatic dihydroxy compound (I) with the dihalobenzonitrile compound (II) is allowed to proceed in a state where the aromatic dihydroxy compound (I), the dihalobenzonitrile compound (II), and the basic compound coexist.

As an example of the method of producing a polyether nitrile according to the present invention, when the compound represented by general formula (2) as the aromatic dihydroxy compound (I) and the compound represented by general formula (3) as the dihalobenzonitrile compound (II) are subjected to a polycondensation reaction using potassium carbonate as the basic compound, a polyether nitrile having a repeating unit represented by general formula (1) is obtained. The reaction formula in this case is shown below.

[Chem. 6]

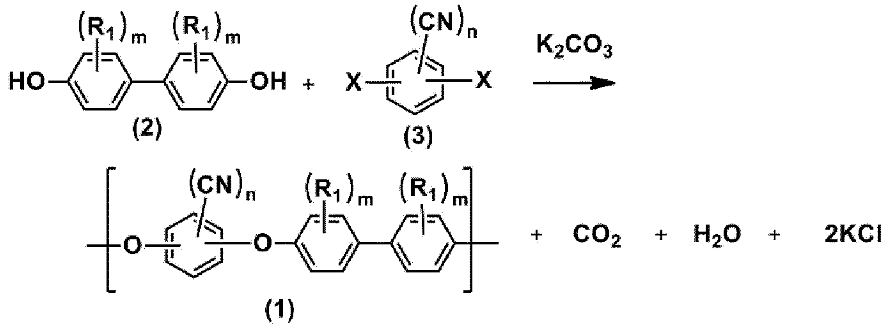


(2) (3) (1)

(In the formula, $R_1$, X, m, and n are as defined in general formulae (1) to (3).)

In producing the polyether nitrile, the polycondensation reaction may be carried out through divided steps of an oligomer formation step (A) and a polymerization step (B), in which the reaction is carried out in different ways, or through a single undivided step.

The oligomer formation step (A) is a step of subjecting the aromatic dihydroxy compound (I) and the dihalobenzonitrile compound (II) to a polycondensation reaction in the presence of a basic compound to form an oligomer. The oligomer in this case is not particularly limited, and a polycondensation reaction product having a polymer reduced viscosity of about less than 1 is referred to as an oligomer.

The polymer formation step (B) is a step of further subjecting the oligomer obtained in the step (A) to the polycondensation reaction to form a polymer. As the oligomer at this time, the polycondensation reaction solution in the step (A) can be used as it is, or an oligomer isolated by additionally performing the step (A) can also be used.

The polycondensation reaction involves an operation to remove water generated during a desalting reaction out of the system. The method of the operation is, for example, a method in which the reaction is run at a temperature at which the desalting reaction proceeds in the presence of a solvent that forms an azeotrope with water, and during the reaction, water is distilled off the reaction mixture by means of the solvent that forms an azeotrope with water. This allows the reaction to be maintained in a substantially anhydrous state. The temperature at which the desalting reaction starts is typically around 130°C, while depending on the raw materials. For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the

reaction temperature is preferably in the range of 130°C to 170°C. When the reaction is continued, it is preferable to maintain the reaction system in a substantially anhydrous state while removing water produced as a result of the reaction. When the water produced is not sufficiently removed, the water may react with the dihalobenzonitrile compound (II) to form a by-product having a phenol skeleton, resulting in the production of a low-molecular-weight product alone. That is, to obtain a high-molecular-weight polyether nitrile, the reaction system preferably contains substantially no water, preferably less than 0.5 wt% of water.

The polycondensation reaction is carried out under atmospheric pressure in an inert atmosphere such as a nitrogen atmosphere, but may also be carried out under increased pressure or reduced pressure.

<Solvent>

In the polycondensation reaction, a reaction solvent can be used, and it is preferable to use an aprotic solvent as the reaction solvent.

Specific examples of the aprotic solvent include N,N-dimethylacetamide, N,N-dimethylformamide, N-methyl-2-pyrolidone, 1,3-dimethyl-2-imidazolidinone, γ-butyrolactone, sulfolane, dimethyl sulfoxide, diethyl sulfoxide, dimethyl sulfone, diethyl sulfone, diisopropyl sulfone, diphenyl sulfone, diphenyl ether, benzophenone, dialkoxybenzenes (the number of carbon atoms in the alkoxy group, 1 to 4), and trialkoxybenzenes (the number of carbon atoms in the alkoxy group, 1 to 4). Among these solvents, high-permittivity polar organic solvents such as N-methyl-2-pyrolidone, N,N-dimethylacetamide, sulfolane, diphenyl sulfone, and dimethyl sulfoxide are particularly suitable for use. These can be used alone or in combination of two or more.

Furthermore, a nitrogen-containing solvent may be used, and specific examples include N-alkylpyrrolidinones such as dimethylacetamide, dimethylformamide, and N-methylpyrrolidinone. Other solvents such as benzophenone and tetra-substituted urea may also be used.

The amount of dipolar aprotic solvent used is not particularly limited as long as the raw materials are homogeneously dissolved and the alkali metal salt is dispersed well by stirring. Any amount that maximizes the volume efficiency of a reaction vessel may be chosen according to the raw materials used and the target polymer. Typically, the amount is chosen in the range of 0.5 to 20 times the total weight of the raw materials and the alkali metal salt.

Specific examples of the solvent that forms an azeotrope with water include aromatic hydrocarbons such as benzene, toluene, xylene, hexane, cyclohexane, octane, chlorobenzene, dioxane, tetrahydrofuran, anisole, and phenetole. These can be used alone or in combination of two or more.

When the solvent that forms an azeotrope with water is used, it is preferable to use the solvent that forms an azeotrope with water in an amount in the range of 1 to 100 parts by weight relative to 100 parts of the aprotic solvent, more preferably in the range of 1 to 10 parts by weight, still more preferably in the range of 2 to 5 parts by weight, from the viewpoint of volume efficiency and solvent recovery.

<Reaction temperature>

The reaction temperature in the polycondensation reaction is in the range of 140°C to 300°C. Within this range, the reaction may be continued at a constant temperature, or the temperature may be increased as the polycondensation reaction proceeds.

When the polycondensation reaction is carried out through divided steps of the oligomer formation step (A) and the polymerization step (B), the reaction temperature in the oligomer formation step (A) is preferably in the range of 140°C to 200°C, more preferably in the range of 150°C to 170°C, still more preferably in the range of 155°C to 165°C, and the reaction temperature in the polymerization step (B) is preferably in the range of 200°C to 300°C, more preferably in the range of 210°C to 270°C, still more preferably in the range of 210°C to 240°C, particularly preferably in the range 215°C to 230°C.

For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the reaction temperature is preferably in the range of 190°C to 280°C.

The reaction time of the polycondensation reaction varies depending on the reaction conditions and the raw materials used, but is typically 3 to 20 hours.

When the polycondensation reaction is carried out through divided steps of the oligomer formation step (A) and the polymerization step (B), the reaction time of the step (A), while the reaction is preferably continued until carbon dioxide and water are not substantially produced, is not particularly limited. The reaction time is typically 1 to 6 hours, preferably 1 to 4 hours. The reaction time of the step (B) varies depending on the reaction conditions and the raw materials used, but is 1 to 8 hours, preferably 1 to 7 hours, more preferably 1 to 6 hours.

For the molecular weight of the target polyether nitrile, the progress of the reaction can be controlled using a

monofunctional phenol chain stopper such as p-phenylphenol, phenol, t-butylphenol, or others or a monofunctional halogen chain stopper such as a monohalobenzonitrile or a monohalodiphenyl sulfone.

After the desired molecular weight of the target polyether nitrile has been achieved, treating the polymer with an activated aromatic halide such as a methyl halide or a benzyl halide or an aliphatic halide is preferred because hydroxy end groups of the polyether nitrile are converted into ether groups which stabilize the polymer, so that the polymer can be provided with good melt and oxidation stability.

<Treatment after reaction>

After completion of the polycondensation reaction, the polycondensation reaction product is taken out from the reaction vessel, solidified by cooling, then pulverized, and subjected to subsequent cleaning, drying, and molding material (pellet or chip) production steps; alternatively, the polycondensation reaction product taken out from the reaction vessel may be directly put into a cleaning tank in the cleaning step, or a solvent for use in the cleaning step described below may be poured into the reaction vessel after completion of the polycondensation reaction to transfer the product in slurry form or wax form to the cleaning step.

The cleaning step is a step of performing cleaning to remove a salt, a reaction solvent, and the like contained in the polycondensation reaction product obtained by the polycondensation reaction.

In this cleaning step, preferably, the reaction solvent in the polycondensation reaction product is subjected to extraction cleaning by a known method using a solvent such as an alcohol, a ketone, an aromatic hydrocarbon, an aliphatic hydrocarbon, or water, and then the salt resulting from the desalting reaction in the polycondensation reaction product is removed by cleaning with preferably water.

In a specific operation, the polycondensation reaction product in pulverized, slurry, or wax form is transferred to a container equipped with a stirrer, and an operation of stirring cleaning with a cleaning solvent and filtration is repeated until the contents of the reaction solvent and the salt fall below the desired levels.

As an apparatus, for example, a combination of a cleaning tank with a pressure filter or a centrifuge, or a multifunctional filtration system capable of performing cleaning, filtration, and drying by itself may be used.

Specific examples, excluding water, of solvents for extraction cleaning of the reaction solvent include alcohols such as methanol, ethanol, propyl alcohol, isopropyl alcohol, butyl alcohol, isobutyl alcohol, sec-butyl alcohol, t-butyl alcohol, n-amyl alcohol, isoamyl alcohol, t-amyl alcohol, n-hexyl alcohol, cyclohexanol, n-octyl alcohol, and capryl alcohol; ketones such as acetone, methyl ethyl ketone, methyl n-propyl ketone, diethyl ketone, 2-hexanone, 3-hexanone, methyl-t-butyl ketone, di-n-propyl ketone, diisopropyl ketone, diisobutyl ketone, di-n-amyl ketone, diacetyl, acetylacetone, cyclohexanone, and benzophenone; aliphatic hydrocarbons including saturated aliphatic hydrocarbons such as n-hexane, 2-methylheptane, 3-methylheptane, 2,2-dimethylbutane, 2,3-dimethylbutane, n-heptane, 2-methylhexane, 3-methylhexane, 2,2-dimethylpentane, 2,3-dimethylpentane, 2,4-dimethylpentane, 3,3-dimethylpentane, 3-ethylpentane, 2,2,3-trimethylbutane, and cyclohexane and unsaturated hydrocarbons such as 1-hexene, 1-heptene, 1-octene, and cyclohexene; and aromatic hydrocarbons such as benzene, toluene, o-xylene, m-xylene, p-xylene, ethylbenzene, n-propylbenzene, cumene, n-butylbenzene, t-butylbenzene, styrene, and allylbenzene.

Of these, for example, methanol, ethanol, acetone, methyl ethyl ketone, xylene, and toluene are preferred, and acetone and methanol are particularly preferred in terms of operability and ease of distillation recovery of the reaction solvent after cleaning.

For the cleaning of the alkali metal salt such as potassium chloride resulting from the desalting polycondensation reaction, water is preferably used, or acidic water containing oxalic acid or acetic acid at a low concentration may be used.

For the conditions of this cleaning step, the amount of cleaning solvent used, the number of times of cleaning, and the cleaning temperature may be appropriately selected according to the amounts of residual reaction solvent and residual alkali metal salt desired to be removed.

The drying step is a step of drying the polycondensation reaction product obtained by the cleaning step.

The water-containing polycondensation reaction product that has been through the cleaning is dried by a known method. As a dryer, a known apparatus such as an evaporator, a shelf-type oven, or a tumbler can be used.

The target water content is typically 0.5 wt% or less, preferably 0.4 wt% or less, more preferably 0.3 wt% or less.

This drying step may be performed under any conditions as long as the temperature is equal to or lower than the melting point of the polycondensation reaction product and water can be removed. To avoid contact with air as much as possible, the drying step is preferably performed under reduced pressure in an inert gas (e.g., nitrogen or argon) atmosphere or under a stream of inert gas.

The polyether nitrile that has been through the drying step is basically a powder.

The molecular weight (weight-average molecular weight (Mw)) of the polyether nitrile produced by the above-described method depends on the intended use and is not particularly limited, and the molecular weight determined by GPC is 40,000 to 1,000,000, preferably 50,000 to 500,000, more preferably 60,000 to 300,000. If the molecular weight of the polymer obtained is less than 40,000, the polymer has poor mechanical strength, and if it is 1,000,000 or more, the

polymer is difficult to mold, which are not preferred. In the production methods according to the present invention, a polyether nitrile having a molecular weight (weight-average molecular weight (Mw)) in such a range is used.

The polyether nitrile in the present invention preferably includes a polyether nitrile having a repeating unit represented by general formula (1).

The method for producing a polyether nitrile molding material according to the present invention includes performing molding using a polyether nitrile having a bulk density of 0.3 to 1.0 g/mL.

The molding material in the present invention means a substance used to produce a molded article and having a shape of, for example, pellets or chips.

The bulk density in the present invention is measured by a method depending on the shape of the polyether nitrile used for molding. When the polyether nitrile is shaped as a powder and granular body such as powder, granules, or flakes, the bulk density is determined by filling the powder and granular body of the polyether nitrile into a certain-volume container to the brim, measuring the mass of the filled polyether nitrile, and dividing the value of the mass by the value of the volume of the container. In the case of a compressed powder and granular body formed into a tablet shape, a disk shape, a spherical shape, a cylindrical shape, a rectangular parallelepiped shape, or other shapes by compressing the powder and granular body, the bulk density is determined by dividing the value of the mass of the compressed body by the value of the volume of the compressed body. The volume of the compressed body may be calculated from measured dimensions of the compressed body or may be calculated from inside dimensions of a die in which the compressed body is molded.

A powder of the polyether nitrile obtained by the above-described method typically has an average particle size of about several tens of micrometers and a bulk density of about 0.2 g/mL, but compressing or densifying the powder can provide the polyether nitrile having a bulk density of 0.3 to 1.0 g/mL for use in the present invention.

The bulk density of the polyether nitrile for use in the present invention is preferably in the range of 0.4 to 1.0 g/mL, more preferably in the range of 0.5 to 1.0 g/mL.

The production method according to the present invention, because of using a polyether nitrile having such a bulk density, can reduce the area in contact with oxygen in air to suppress the influence of oxygen and can provide a polyether nitrile molding material that exhibits high flowability during molding.

Examples of the shape of the polyether nitrile used in the production method according to the present invention include powder and granular bodies such as powder, granules, and flakes and compressed bodies having a tablet shape, a disk shape, a spherical shape, a cylindrical shape, a rectangular parallelepiped shape, and other shapes. Among the powder and granular bodies, flakes are preferred, and the compressed bodies are preferred regardless of the shape.

Examples of methods of obtaining the polyether nitrile having a bulk density of 0.3 to 1.0 g/mL according to the present invention include methods such as compression molding and granulation. Specific examples thereof include a method in which a polyether nitrile powder obtained by the above-described method is placed in a die and compression molded with a pressing machine and a compression granulation method using a tableting machine, a pellet mill, a roller compactor (continuous processing dry granulator), or the like. A compressed body obtained by such a method can be formed into flakes by being crushed to such an extent that the above-mentioned bulk density is satisfied.

Alternatively, if the above-mentioned bulk density can be satisfied, a powder densified and wetted with a poor solvent such as acetone can be formed into flakes by being subjected to a screw extruder. A wet extrusion granulation method in which the flakes are further kneaded, compressed, and extruded through a die provided with perforations to obtain a compressed body can also be used.

Regarding the method of molding into a molding material such as pellets or chips in the production method according to the present invention, a melt-kneading apparatus such as a single-screw, twin-screw, or multi-screw extruder, a Banbury mixer, a kneader, or a roller is typically used as a molding apparatus, but a molding material such as pellets or chips may be produced by cutting a sheet prepared using a compression molding machine as used in Examples described later.

In the production method according to the present invention, performing the molding under exclusion of oxygen or in an inert atmosphere is preferred for providing a polyether nitrile molding material having higher flowability.

In the present invention, "under exclusion of oxygen" means a condition where oxygen does not flow into a molding apparatus, and it is not intended to remove oxygen slightly contained in the apparatus and in the polyether nitrile used. For example, by setting the molding condition to a pressurized condition, the condition where oxygen does not flow into a molding apparatus, that is, "under exclusion of oxygen" in the present invention, can be achieved.

The molding apparatus may be brought to be in an inert atmosphere by using an inert gas such as nitrogen gas or argon gas.

In an industrially preferred process in producing the polyether nitrile molding material, a polyether nitrile is molded into a powder and granular body or a compressed powder and granular body by the above-described method, and directly transferred to, for example, a silo sealed with nitrogen gas or the like and stored there without being exposed to the outside air.

When formed into a shape of, for example, pellets or chips, the powder and granular body or the compressed powder and granular body is preferably transferred to an extruder together with nitrogen gas through a pipe without any

treatment and molded.

When molding is performed outside, the powder and granular body or the compressed powder and granular body stored in a container or bag sealed with nitrogen gas or the like is transported, and used by unsealing the container or bag at the time of molding.

In the method for producing a polyether nitrile molding material according to the present invention, molding is performed at a temperature higher than the melting point of the polyether nitrile. To minimize the influence of oxygen, the temperature is preferably as low as possible. The upper limit is typically 500°C or lower, and the molding is particularly preferably performed in a temperature range higher than the melting point of the polyether nitrile and not higher than a temperature 40°C higher than the melting point.

In the case of a polyether nitrile used in Examples, which is obtained using biphenol and 2,6-dichlorobenzonitrile, the melting point is 364°C, and thus the molding is performed at a temperature higher than 364°C. From the viewpoint of the flowability of a polyether nitrile molding material to be obtained, the upper limit of the temperature is preferably 450°C or lower, more preferably 430°C or lower, still more preferably 405°C or lower, particularly preferably 390°C or lower.

The melt flow rate (MFR) of the polyether nitrile molding material obtained by the method for producing a polyether nitrile molding material according to the present invention, as measured at 390°C under a load of 5000 g in accordance with ISO 1133, is in the range of 2 to 50 g/10 min, preferably in the range of 3 to 50 g/10 min, more preferably in the range of 4 to 50 g/10 min, still more preferably in the range of 5 to 50 g/10 min.

The polyether nitrile molding material obtained by the method according to the present invention, when melted by heating, exhibits flowability higher than that of a molding material obtained by molding a polyether nitrile having a low bulk density and thus can provide a stable molded article excellent in surface smoothness, dimensional stability, etc. and having improved usage quality.

The polyether nitrile molding material obtained by the method according to the present invention can be mixed with at least one selected from the group consisting of a thermoplastic resin material (A), an additive (B), and a filler (C) described later to produce a polyether nitrile resin composition.

The polyether nitrile resin composition in the present invention contains the above-described polyether nitrile molding material and at least one selected from the group consisting of a thermoplastic resin material (A), an additive (B), and a filler (C).

The polyether nitrile resin composition molding material in the present invention means a substance formed of the polyether nitrile resin composition and formed into a shape of, for example, pellets or chips.

Specific examples of the thermoplastic resin material (A) contained in the polyether nitrile resin composition include high-density polyethylene, medium-density polyethylene, isotactic polypropylene, acrylonitrile-butadiene-styrene (ABS) resin, acrylonitrile-styrene (AS) resin, acrylic resin, fluorocarbon resin (e.g., polytetrafluoroethylene), polyester, polycarbonate, polyarylate, aliphatic polyamide, aromatic polyamide, polysulfone, polyether sulfone, polyether ketone, polyether ether ketone, polyether nitrile, polyphenylene sulfide, polyetherimide, polyamide-imide, polyesterimide, and modified polyphenylene oxide.

Specific examples of the additive (B) contained in the polyether nitrile resin composition include hydrophilic agents, antioxidants, secondary antioxidants, flame retardants, flame retardant aids, plasticizers, lubricants, release agents, antifogging agents, weathering stabilizers, light stabilizers, hydrolysis resistance improvers, flowability improvers, UV absorbers, antistatic agents, metal deactivators, near-infrared absorbers, and colorants (dyes and pigments).

Specific examples of the filler (C) contained in the polyether nitrile resin composition include various metal powders, powders of inorganic acid metal salts (e.g., calcium carbonate, zinc borate, calcium borate, zinc stannate, calcium sulfate, and barium sulfate), powders of metal oxides (e.g., magnesium oxide, iron oxide, titanium oxide, zinc oxide, and alumina), powders of metal hydroxides (e.g., aluminum hydroxide, magnesium hydroxide, zirconium hydroxide, and alumina hydrate (boehmite)), powders of metal sulfides (e.g., zinc sulfide, molybdenum sulfide, and tungsten sulfide), silver nanowires, carbon fibers, glass fibers, carbon nanotubes, graphene, and ceramic materials such as silica.

In the polyether nitrile resin composition in the present invention, the amount of (A) to (C), which may be contained in an appropriate amount depending on the intended use, is preferably 90 wt% or less relative to the total weight of the polyether nitrile resin composition.

In producing the polyether nitrile resin composition in the present invention, methods such as 1) preliminarily mixing the polyether nitrile molding material obtained by the method according to the present invention and other components ((A) to (C) above) and then transferring the mixture to an extruder, 2) preliminarily preparing a plurality of polyether nitrile resin composition molding materials containing the polyether nitrile molding material obtained by the method according to the present invention and other components ((A) to (C) above) in different compositions, mixing the molding materials in predetermined amounts so as to give a desired content ratio, and then transferring the mixture to an extruder, and 3) directly feeding the polyether nitrile molding material obtained by the method according to the present invention and other components ((A) to (C) above) into an extruder can be employed. These methods are preferably performed in an inert atmosphere.

Melt-kneading is then performed in no contact with oxygen (air), and a molten polymer from a die is pelletized by

cutting in water or water-cooled cutting of a strand.

A method for producing a polyether nitrile resin composition molding material according to the present invention includes molding a polyether nitrile resin composition obtained by mixing a polyether nitrile having a bulk density of 0.3 to 1.0 g/mL, which is obtained by the above-described method, with at least one selected from the group consisting of (A) to (C): a thermoplastic resin material (A), an additive (B), and a filler (C).

The polyether nitrile having a bulk density of 0.3 to 1.0 g/mL exhibits high flowability when the polyether nitrile is molded to produce a molding material, as described above, and thus exhibits high flowability also when a polyether nitrile resin composition obtained by mixing the polyether nitrile with at least one selected from the group consisting of (A) to (C): a thermoplastic resin material (A), an additive (B), and a filler (C), is molded into a molding material and allows efficient production of the molding material.

In producing the polyether nitrile resin composition molding material in the present invention, methods such as 1) preliminarily mixing the polyether nitrile having a bulk density of 0.3 to 1.0 g/mL and other components ((A) to (C) above) and then transferring the mixture to an extruder, 2) preliminarily preparing a plurality of polyether nitrile resin composition molding materials containing the polyether nitrile having a bulk density of 0.3 to 1.0 g/mL and other components ((A) to (C) above) in different compositions, mixing the molding materials in predetermined amounts so as to give a desired content ratio, and then transferring the mixture to an extruder, and 3) directly feeding the polyether nitrile having a bulk density of 0.3 to 1.0 g/mL and other components ((A) to (C) above) into an extruder can be employed. These methods are preferably performed in an inert atmosphere.

Melt-kneading is then performed in no contact with oxygen (air), and a molten polymer from a die is pelletized by cutting in water or water-cooled cutting of a strand.

In the method for producing a polyether nitrile resin composition molding material according to the present invention, preferred embodiments and specific examples of the method and conditions of molding are the same as those of the method and conditions of molding in the above-described method for producing a polyether nitrile molding material.

Previously, the present inventors have ascertained that when a polyether nitrile is subjected to melt kneading or heat compression molding to be formed into a molding material such as pellets or chips, flowability greatly decreases.

The present inventors have considered that this great decrease in melt flowability is due to the fact that the polyether nitrile has a very high melting point and needs to be molded at a high temperature close to 400°C, which is thermally intolerable for commonly used engineering plastics.

In addition, as described above, the polyether nitrile produced by desalting polycondensation, due to its production process, can be obtained as a pure polymer only in the form of a fine powder having a large specific surface area or powder, and thus the present inventors have presumed that when the polyether nitrile is molded into pellets or chips, the influence of oxidation by oxygen, in addition to the high temperature close to 400°C, is very significant, and considered that the polyether nitrile molding material of the related art experiences a great decrease in flowability because a cross-linked structure is formed under the influence of oxidation by oxygen during molding at a high temperature close to 400°C.

Thus, to avoid the influence of oxidation during molding into a molding material such as pellets or chips, the present inventors have previously studied production under conditions where the influence of oxygen is eliminated under exclusion of air intrusion or in an inert gas atmosphere such as nitrogen, and found that a polyether nitrile molding material that exhibits high flowability can be obtained.

However, when a powder having a large specific surface area is used, it is greatly affected by even trace amounts of air intrusion, thus presenting a difficulty in facility management.

Thus, this time, the present inventors have revealed that by using a polyether nitrile having an increased bulk density and a decreased surface area, the area in contact with oxygen is reduced to reduce the oxidative cross-linking reaction during molding, and a polyether nitrile molding material and a polyether nitrile resin composition molding material that exhibit good flowability can be obtained, thereby completing the present invention.

Molded articles and parts obtained using the polyether nitrile molding material and the polyether nitrile resin composition molding material obtained by the methods according to the present invention have heat resistance, chemical resistance, flame resistance, and high mechanical properties. The molded articles and parts can be used in, for example, electric and electronic applications such as personal computers and semiconductor parts, automotive applications such as gears, bearings, and housings around engines, or applications in the medical equipment and aerospace fields.

## EXAMPLES

The present invention will now be described more specifically with reference to Examples, but it should be noted that the present invention is not limited to these Examples.

Analysis methods in the present invention are as follows.

<Analysis method>

(1) Measurement of bulk density (g/mL)

A polyether nitrile in the form of a powder and granular body: a polyether nitrile in the form of a powder and granular body was filled into a certain-volume container to the brim, the mass of the filled polyether nitrile was measured, and the bulk density was calculated by dividing the value of the mass by the value of the volume of the container.

A compressed body of a polyether nitrile: for a compressed body prepared by packing a polyether nitrile in the form of a powder and granular body into a die with dimensions described in EXAMPLES and compressing the polyether nitrile, the mass was measured, as accurate a volume as possible was calculated from the dimensions of the compressed body, and the bulk density was calculated by dividing the value of the mass of the compressed body by the value of the volume.

(2) Method of measuring reduced viscosity $\eta_{red}$ (dL/g)

A sample in an amount of 0.1 g was dissolved in about 5 g of parachlorophenol at 180°C, and the solution was transferred to a 10 mL measuring flask. The flask was made up to volume at 40°C. This was weighed out with a 5 mL whole pipette and put into an Ostwald tube (capillary tube, 0.75 mm). The Ostwald tube was allowed to stand in a constant-temperature bath at 40.0°C for 15 minutes, and a flow time T was measured to calculate the reduced viscosity $\eta_{red}$ (dL/g) of a polymer by the following formula.
[Calculation formula]

$$\eta_{red} = \{(T/T_0) - 1\}/C$$

C: solution concentration (g/dL), T: flow time of solution, $T_0$: flow time of solvent

(3) Thermal properties: melting point and glass transition temperature (Tg)

Using a differential scanning calorimeter (DSC-60, manufactured by Shimadzu Corporation), thermal properties of a sample were measured under the following conditions.

Conditions: sample, about 10 mg; nitrogen flow rate, 50 mL/min; temperature change range, 50°C to 450°C; temperature change rate, 10°C/min.

(4) Melt flow rate (MFR) measurement

In accordance with ISO 1133, a sample dried under vacuum at 120°C for 16 hours was measured using a NO.120-FWP MELT FLOW INDEX TESTER (manufactured by YASUDA SEIKI SEISAKUSHO, LTD.) at a temperature of 390°C under a load of 5000 g for a preheating time of 5 minutes.

<Synthesis Example>

In a four-necked 3-liter reaction vessel equipped with a mechanical stirrer, a thermometer, a dry nitrogen inlet, and a reflux condenser, 298.45 g (1.735 mol) of 2,6-dichlorobenzonitrile (hereinafter referred to as "DCBN"), 323.08 g (1.735 mol) of 4,4'-biphenol (hereinafter referred to as "BP"), 251.79 g (1.822 mol) of anhydrous potassium carbonate, 60 g of toluene, and 1562 g of anhydrous sulfolane were loaded. This mixture was heated from room temperature under a stream of nitrogen, and with stirring at 250 rpm, the temperature was increased to 160°C with heating under reflux. At 130°C or higher, carbon dioxide evolved from the reaction of potassium carbonate and biphenol. After 3 hours at 160°C, the oligomerization reaction of "DCBN" and "BP" was completed, and the cooling water in the reflux condenser was then replaced with warm water to remove water and toluene through an outlet, whereby the temperature was raised to 220°C, where a polycondensation reaction was carried out for 3 hours.

After the polycondensation reaction, a polycondensation reaction product was taken out from the bottom of the reaction vessel and allowed to cool and solidify. After this solid product was pulverized with a Waring blender, this substance was washed with acetone and distilled water and dried in a vacuum oven at 120°C for 16 hours to obtain 470 g of a polyether nitrile in powder form. (yield, 95%)

The polyether nitrile in powder form had a reduced viscosity $\eta_{red}$ of 2.19.

The polyether nitrile had a melting point of 364°C and a glass transition temperature (Tg) of 215°C.

The polyether nitrile in powder form had an average particle size of 35 um and a bulk density of 0.22 g/mL.

<Effect of bulk density of polyether nitrile during molding>

<Comparative Example 1>

In a cylinder of a MELT FLOW INDEX TESTER (MFR meter) heated to 390°C, 5 g of the polyether nitrile in powder form having a bulk density of 0.22 g/mL, which was obtained in Synthesis Example, was loaded, held for 5 minutes with a piston put in place, and then measured for an MFR in accordance with ISO 1133 under a load of 5000 g. After the measurement, a product molded in strand form was discharged.

The MFR was found to be 4.1 (g/10 min).

<Example 1>

The polyether nitrile in powder form having a bulk density of 0.22 g/mL, which was obtained in Synthesis Example, was packed into a die having inside dimensions of 90 mm long, 40 mm wide, and 15 mm deep to the brim, and compressed to a thickness of 5 mm under a pressure of 20 MPa at room temperature using a press molding machine (MINI TEST PRESS MP-2FH manufactured by Toyo Seiki Co., Ltd.) to prepare a compressed body of the polyether nitrile in powder form having a size of 90 mm long, 40 mm wide, and 5 mm high. The mass of the compressed body was 10.44 g, and the bulk density determined by dividing the mass by the volume of the compressed body was 0.58 g/mL.

The compressed body was lightly crushed with a hammer to a size small enough to be put in the cylinder of the MFR meter, thereby obtaining a polyether nitrile in flake form. The bulk density of the obtained flakes, as measured by the above-described method of measuring the bulk density of a polyether nitrile in the form of a powder and granular body, was 0.45 g/mL.

The MFR was measured in the same manner as in Comparative Example 1, and after the measurement, a product molded in strand form was discharged. The MFR was found to be 12.6 (g/10 min), demonstrating that flowability corresponding to three times or more the MFR of the polyether nitrile in unprocessed powder form of Comparative Example 1 was exhibited.

The results of Example 1 and Comparative Example 1 have shown that the difference in bulk density of the polyether nitriles used leads to a large difference in flowability during molding, and using a polyether nitrile having a bulk density in the range of 0.3 to 1.0 g/mL provides high flowability during molding, which allows a molding material to be efficiently produced.

The results of Example 1 are presumably due to the fact that the oxidative cross-linking reaction during molding was suppressed by compressing the polyether nitrile in powder form to increase the bulk density, that is, decreasing the area in contact with oxygen in air.

<Example 2>

A spacer was filled with 5 g of the polyether nitrile in flake form obtained in Example 1. Furthermore, a polyimide film was put thereon, and another stainless-steel plate of 150 mm × 150 mm × 5 mm was placed thereon (hereinafter, the resulting assembly is referred to as a "molding die"). The "molding die" was quickly loaded on a lower platen of a press molding machine (MINI TEST PRESS MP-2FH manufactured by Toyo Seiki Co., Ltd.) preliminarily heated to 400°C such that the powder did not spill out. After the "molding die" was loaded, an upper platen was immediately moved down to apply pressure, which reached 10 MPa within 10 seconds, and the "molding die" was held at 400°C for 15 minutes.

After 15 minutes, the "molding die" was removed from the platens and rapidly cooled with an attached water-cooling cold press machine. After the cooling, a polyether nitrile sheet 1 mm thick, 90 mm long, and 40 mm wide was obtained from the removed "molding die".

This sheet was cut to prepare sample pieces about 5 mm square, which were used as polyether nitrile pellets.

The polyether nitrile pellets had an MFR of 13.0 (g/10 min) .

<Comparative Example 2>

Polyether nitrile pellets were obtained by the same operation as in Example 2 except that the polyether nitrile in powder form obtained in Synthesis Example was used instead of the polyether nitrile in Example 2.

The polyether nitrile pellets had an MFR of 9.0 (g/10 min) .

The results of Example 2 and Comparative Example 2 have shown that polyether nitrile pellets having high flowability can be obtained if the bulk density of the polyether nitrile used is high.

<Example 3>

Polyether nitrile pellets were obtained by the same operation as in Example 2 except that the molding temperature in Example 2 was changed to 380°C, which was 16°C higher than the melting point of the polyether nitrile.

The polyether nitrile pellets had an MFR of 18.4 (g/10 min) .

<Comparative Example 3>

Polyether nitrile pellets were obtained by the same operation as in Example 2 except that the polyether nitrile in powder form obtained in Synthesis Example was used instead of the polyether nitrile in Example 2 and the molding temperature was changed to 380°C, which was 16°C higher than the melting point of the polyether nitrile.

The polyether nitrile pellets had an MFR of 13.4 (g/10 min) .

Example 3 has demonstrated that at a temperature slightly higher than the melting point of the resin, that is, at a lower molding temperature, polyether nitrile pellets having higher flowability are obtained. The results of Example 3 and Comparative Example 3 have shown that even when the molding temperature is low, polyether nitrile pellets having high flowability can be obtained if the bulk density of the polyether nitrile used is high.

In the production method according to the present invention, molding is performed using a polyether nitrile having a specific bulk density, and thus the polyether nitrile exhibits high flowability when the polyether nitrile is molded to produce a molding material, so that a polyether nitrile molding material can be efficiently produced, which is very useful.

The polyether nitrile molding material obtained by the production method according to the present invention has high flowability and thus, in producing various molded articles of polyether nitrile, can stably provide a molded article excellent in surface smoothness, dimensional stability, etc. and having improved usage quality, which is very useful.

## Claims

1. A method for producing a polyether nitrile molding material, the method comprising molding a polyether nitrile having a bulk density of 0.3 to 1.0 g/mL.

2. The method for producing a polyether nitrile molding material according to Claim 1, wherein the polyether nitrile is shaped as a powder and granular body or a compressed powder and granular body.

3. The method for producing a polyether nitrile molding material according to Claim 1 or 2, wherein the polyether nitrile includes a polyether nitrile having a repeating unit represented by general formula (1).

[Chem. 1]

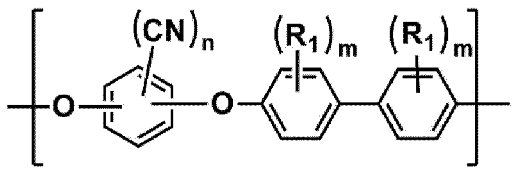

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

4. The method for producing a polyether nitrile molding material according to Claim 1, wherein the molding is performed in a temperature range higher than a melting point of the polyether nitrile and not higher than a temperature 40°C higher than the melting point.

5. The method for producing a polyether nitrile molding material according to Claim 1, wherein the polyether nitrile molding material has a melt flow rate (MFR) in a range of 2 to 50 g/10 min as measured at 390°C under a load of 5000 g in accordance with ISO 1133.

6. A method for producing a polyether nitrile resin composition, the method comprising mixing a polyether nitrile molding

material obtained by the production method according to Claim 1 with at least one selected from the group consisting of (A) to (C) below.

(A) a thermoplastic resin material
(B) an additive
(C) a filler

7. A method for producing a polyether nitrile resin composition molding material, the method comprising molding a polyether nitrile resin composition obtained by mixing a polyether nitrile having a bulk density of 0.3 to 1.0 g/mL with at least one selected from the group consisting of (A) to (C) below.

(A) a thermoplastic resin material
(B) an additive
(C) a filler

8. The method for producing a polyether nitrile resin composition molding material according to Claim 7, wherein the polyether nitrile includes a polyether nitrile having a repeating unit represented by general formula (1).

[Chem. 2]

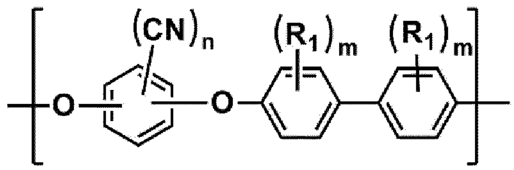

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

9. The method for producing a polyether nitrile resin composition molding material according to Claim 7 or 8, wherein the molding is performed in a temperature range higher than a melting point of the polyether nitrile and not higher than a temperature 40°C higher than the melting point.

**INTERNATIONAL SEARCH REPORT**

International application No.
**PCT/JP2023/010892**

**A. CLASSIFICATION OF SUBJECT MATTER**

***B29B 9/08***(2006.01)i; ***B29B 9/10***(2006.01)i; ***B29B 9/12***(2006.01)i; ***B30B 11/00***(2006.01)i; ***C08G 65/40***(2006.01)i; ***C08J 3/12***(2006.01)i; ***C08K 3/013***(2018.01)i; ***C08L 71/10***(2006.01)i
FI: B29B9/08; B29B9/10; B29B9/12; B30B11/00 F; C08G65/40; C08J3/12 Z CEZ; C08K3/013; C08L71/10

According to International Patent Classification (IPC) or to both national classification and IPC

**B. FIELDS SEARCHED**

Minimum documentation searched (classification system followed by classification symbols)

B29B9/00-9/16; B29C43/00-43/58; B30B11/00-11/34; C08G65/00-65/48; C08J3/12; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 111471291 A (CHANGCHUN INSTITUTE OF APPLIED CHEMISTRY, CHINESE ACADEMY OF SCIENCES) 31 July 2020 (2020-07-31) paragraphs [0004], [0046]-[0051], fig. 2 | 1-2, 5-7 |
| X | JP 61-192540 A (IDEMITSU KOSAN CO LTD) 27 August 1986 (1986-08-27) p. 3, upper left column, line 19 to p. 3, lower left column, line 1 | 1-9 |
| A | WO 2007/052664 A1 (DAIKIN IND LTD) 10 May 2007 (2007-05-10) entire text, all drawings | 1-9 |

☐ Further documents are listed in the continuation of Box C.
☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

## INTERNATIONAL SEARCH REPORT
**Information on patent family members**

International application No.
**PCT/JP2023/010892**

| Patent document cited in search report | Publication date (day/month/year) | Patent family member(s) | Publication date (day/month/year) |
|---|---|---|---|
| CN 111471291 A | 31 July 2020 | (Family: none) | |
| JP 61-192540 A | 27 August 1986 | EP 192262 A2<br>p. 13, line 6 to p. 14, line 13<br>EP 445840 A2<br>US 4640974 A | |
| WO 2007/052664 A1 | 10 May 2007 | US 2010/0130690 A1<br>entire text, all drawings<br>US 2012/0296047 A1<br>EP 1947144 A1<br>EP 2527397 A1<br>EP 2641936 A1<br>CN 101300301 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60147439 A
- JP 61055120 A